# EUROPEAN PATENT APPLICATION

(11) **EP 3 770 183 A1**
(43) Date of publication of application: **27.01.2021**
(21) Application number: 19897535.1
(22) Date of filing: 01.07.2019
(51) Int. Cl.: C08F 4/645, C08F 4/649

(54) **INDUSTRIAL PREPARATION METHOD FOR ZIEGLER-NATTA CATALYST**

(30) Priority: 28.05.2019 CN 201910451199
(71) Applicant: CHINA ENERGY GROUP NINGXIA COAL INDUSTRY CO., LTD., Yinchuan, Ningxia 750001 (CN); Institute of Chemistry, Chinese Academy of Science, Beijing 100190 (CN)
(72) Inventor: JIAO, Hongqiao, Yinchuan, Ningxia 750001 (CN); LI, Huayi, Beijing 100190 (CN); SHAO, Junjie, Yinchuan, Ningxia 750001 (CN); YUAN, Wei, Yinchuan, Ningxia 750001 (CN); HU, Youliang, Beijing 100190 (CN); HUANG, He, Yinchuan, Ningxia 750001 (CN); LI, Qian, Beijing 100190 (CN); WANG, Lin, Yinchuan, Ningxia 750001 (CN)
(74) Representative: Ström & Gulliksson AB
(86) International application number: PCT/CN2019/094227
(87) International publication number: WO 2020/237772

(57) **Abstract**

The present invention relates to the technical field of catalyst preparation, and discloses a preparation method of a Ziegler-Natta catalyst. The method includes the following steps: subjecting magnesium halide, alcohol and an electron donor to a first contact reaction in the presence of an inert solvent to obtain a magnesium halide alcoholate and performing first cooling; subjecting titanium halide to second cooling; subjecting the cooled titanium halide, the cooled product containing the magnesium halide alcoholate and an electron donor to a second contact reaction; filtering the product of the second contact reaction to obtain the Ziegler-Natta catalyst; and subjecting the Ziegler-Natta catalyst and the heated titanium halide to a third contact reaction. The method has the advantages such as short cycle, high efficiency, etc., being suitable to industrial production.

## Description

### Technical Field

The present invention relates to the technical field of catalyst preparation, and in particular relates to an industrial preparation method of a Ziegler-Natta catalyst.

### Background

Since the advent of Ziegler-Natta catalysts, related technology for olefin polymerization catalysts has made a great progress, particularly in terms of preparation of internal electron donors and carriers, a lot of innovations have been made. For example, CN102212153A discloses an olefin polymerization catalyst solid component containing maleic acid diester and a preparation method thereof; CN102212154A discloses an olefin polymerization catalyst solid component and a preparation method thereof, and in particular discloses a preparation method of a catalyst component using a 1,2-cyclohexane dicarboxylic acid diester compound or a 1-cyclohexene-1,2-dicarboxylic acid diester compound as an internal electron donor; CN102432705A discloses an olefin polymerization catalyst solid component and a preparation method thereof, and in particular discloses a preparation method of a catalyst component using hydrofluorene diether as an internal electron donor; CN108264589A discloses a polypropylene catalyst component, a preparation method thereof, and a polypropylene catalyst, and in particular discloses a catalyst using 2,2'-biphenyldiphenolester compouds and 2,2'-dialkyl-1,3-dimethylether compouds as an internal electron donor; CN103030718A discloses a method for preparing a carrier of an olefin polymerization solid catalyst, including the following main steps: firstly dissolving a halogen or a halogen compound in a part of alcohols, then adding a part of metal magnesium and conducting heating, stirring and mixing, then continuing adding alcohols and metal magnesium, finally adding titanium halide, and carrying out a reaction to obtain the carrier of the olefin polymerization solid catalyst.

Although a lot of research works have been made in the field of preparation of Ziegler-Natta catalysts, the industrial preparation process of the catalyst is still very cumbersome and long, it is required to make some innovations and improvements to increase the production efficiency of the catalyst.

### Summary

The present invention aims to solve the problems existing in the prior art such as long preparation cycle and low efficiency, and provides an industrial preparation method of a Ziegler-Natta catalyst, and the method has the advantages such as short cycle, high efficiency, etc.

In order to achieve the above-mentioned purpose, the invention provides an industrial preparation method of a Ziegler-Natta catalyst, wherein the method includes the following steps:
(1) subjecting magnesium halide, alcohol and a first electron donor to a first contact reaction in the presence of an inert solvent to obtain a magnesium halide alcoholate;
(2) performing first cooling on the product containing the magnesium halide alcoholate obtained in the step (1) to obtain a cooled product containing the magnesium halide alcoholate;
(3) subjecting titanium halide to second cooling to obtain cooled titanium halide;
(4) subjecting the cooled titanium halide, the cooled product containing the magnesium halide alcoholate and a second electron donor to a second contact reaction; and
(5) filtering the product of the second contact reaction to obtain the Ziegler-Natta catalyst.

Preferably, the method also includes the steps: subjecting the titanium halide to first heating to obtain heated titanium halide, and subjecting the Ziegler-Natta catalyst in the step (5) and the heated titanium halide to a third contact reaction.

Preferably, the method also includes a step of washing the Ziegler-Natta catalyst.

Preferably, the method also includes a step of sieving the Ziegler-Natta catalyst.

Preferably, the method also includes a step of packing the Ziegler-Natta catalyst.

Preferably, the method also includes the steps: subjecting a solvent to second heating to obtain a heated solvent, and washing the Ziegler-Natta catalyst in the step (5) by using the heated solvent; the solvent is pentane, hexane or heptane.

Preferably, each step is conducted under protection of an inert gas.

Preferably, the water content of each raw material is less than 10 ppm.

Preferably, the general formula of the magnesium halide is MgR¹R², wherein R¹ and R² are the same or different halogens.

Preferably, the magnesium halide is magnesium chloride, magnesium bromide or magnesium iodide.

Preferably, the alcohol is one or more selected from monohydric alcohol or polyhydric alcohol.

Preferably, the first electron donor and the second electron donor are respectively one or more selected from phenols, ketones, aldehydes, carboxylic acid, organic or inorganic acid ester, ether, ester ether and alkylsiloxanes.

Preferably, the first electron donor and the second electron donor are the same.

Preferably, the inert solvent is one or more selected from alkane, arene and a substitution product thereof.

Preferably, in the step (1), the molar ratio of the magnesium halide to the alcohol to the first electron donor is from 1:10:0.1 to 10:1:5, more preferably from 1:5:0.1 to 5:1:3; the volume ratio of the alcohol to the inert solvent is from 1:10 to 10:1, more preferably from 1:5 to 5:1.

Preferably, the first contact reaction is performed at a temperature T₁ of 50 °C to 180 °C, more preferably from 80 °C to 150 °C, and the first contact reaction is performed for a period of t₁ being 0.5 hour to 5 hours, more preferably 1 hour to 3 hours.

Preferably, the first cooling is performed at a temperature T₂ of -50 °C to 10 °C, more preferably -30 °C to 0 °C.

Preferably, the second cooling is performed at a temperature T₃ of -50 °C to 10 °C, more preferably -30 °C to 0 °C.

Preferably, the general formula of the titanium halide is TiR³ₖR⁴ₗ, wherein R³ is halogen, R⁴ is C1-C5 alkoxy, 1 is an integer of 0 to 3, and k+l=4.

Preferably, the titanium halide is titanium tetrachloride, titanium tetrabromide or titanium tetraiodide.

Preferably, in the step (4), the volume ratio of the cooled titanium halide to the cooled product containing the magnesium halide alcoholate is from 10:1 to 1:2, more preferably from 5:1 to 1:1; the molar ratio of the second electron donor to the magnesium halide alcoholate is from 1:20 to 1:1, more preferably from 1:10 to 1:2.

Preferably, the second contact reaction is performed at a temperature T₄ of 50 °C to 200 °C, more preferably 80 °C to 160 °C, and the second contact reaction is performed for a period of t₂ being 0.5 hour to 10 hours, more preferably 1 hour to 5 hours.

Preferably, the first heating is performed at a temperature T₅ of 50 °C to 200 °C, more preferably 80 °C to 160 °C.

Preferably, the third contact reaction is performed at a temperature T₆ of 50 °C to 200 °C, more preferably 80 °C to 160 °C, and the third contact reaction is performed for a period of t₃ being 0.5 hour to 10 hours, more preferably 1 hour to 5 hours.

Preferably, the second heating is performed at a temperature T₇ of 30 °C to 65 °C, preferably 40 °C to 60 °C.

The method of the present invention effectively reduces the waiting time of heating and cooling by adopting separate operations of pre-cooling and pre-heating, and conducting heat exchange on the raw materials to an operating temperature in advance; meanwhile, increases the utilization ratio of a catalyst loaded kettle by carrying out a catalyst filtration process in a separate catalyst filter; and the method of the present invention is used in the catalyst industrial preparation, and has the advantages such as short cycle, high production efficiency, etc.

### Detailed Description of the Embodiments

An endpoint of a range and any value disclosed herein are not limited to this precise range or value, and these ranges or values should be interpreted as including a value near these ranges or values. For a numerical range, endpoint values of each range, endpoint value of each range and individual point value, and individual point values can be combined with one another to obtain one or more new numerical ranges, and these numerical ranges should be regarded as being particularly disclosed herein.

In order to achieve the purpose of the present invention, the invention provides an industrial preparation method of a Ziegler-Natta catalyst, wherein the method includes the following steps:
(1) subjecting magnesium halide, alcohol and a first electron donor to a first contact reaction in the presence of an inert solvent to obtain a magnesium halide alcoholate;
(2) performing first cooling on the product containing the magnesium halide alcoholate obtained in the step (1) to obtain a cooled product containing the magnesium halide alcoholate;
(3) subjecting titanium halide to second cooling to obtain cooled titanium halide;
(4) subjecting the cooled titanium halide, the cooled product containing the magnesium halide alcoholate and a second electron donor to a second contact reaction; and
(5) filtering the product of the second contact reaction to obtain the Ziegler-Natta catalyst.

The method of the present invention effectively reduces the waiting time of heating and cooling by conducting heat exchange on the raw materials to an operating temperature in advance; meanwhile, increases the utilization ratio of the catalyst loaded kettle by carrying out a catalyst filtration process in a separate catalyst filter, thereby shortening the production cycle and improving the production efficiency.

In the method according to the present invention, in order to further shorten the production cycle, the product containing the magnesium halide alcoholate obtained in the step (1) can be introduced into a separate storage tank to be subjected to a next cooling step.

In the method according to the present invention, in order to further shorten the production cycle, the step (3) i.e. a cooling step of the titanium halide is conducted while the cooling process is performed in the above-mentioned step (2).

By introducing and separately cooling the reaction materials and meanwhile conducting cooling treatment on the materials to be reacted, the production cycle of the catalyst is further shortened.

In the method according to the present invention, there is no specific limitation on reaction device in the step (4), the reaction device can be various catalyst production devices commonly used in the art, and in the specific embodiments of the invention, a catalyst loaded kettle is used to prepare the Ziegler-Natta catalyst.

Preferably, the method also includes the steps: the titanium halide is subjected to first heating to obtain heated titanium halide, and the Ziegler-Natta catalyst in the step (5) and the heated titanium halide are subjected to a third contact reaction. By such a step, the production cycle can be further shortened, and the performance of the prepared Ziegler-Natta catalyst is ensured.

Preferably, the method also includes a step of washing the Ziegler-Natta catalyst. In particular, the prepared Ziegler-Natta catalyst can be washed by using a solvent such as pentane, hexane, and heptane. There is no specific limitation on the number of washing, washing can be performed for 2-8 times, and the number of washing can also be adjusted properly as required.

The above-mentioned step can also include a step of drying the washed Ziegler-Natta catalyst.

There is no specific limitation on the above-mentioned drying mode, drying can be carried out in a drying kettle. In particular, for example, the washed catalyst solid particle can be conveyed to the drying kettle to be vacuum-dried.

The drying can be performed, for example, at a temperature of 50 °C to 200 °C, preferably 60 °C to 90 °C.

Preferably, the method also includes a step of sieving the Ziegler-Natta catalyst. In particular, graded screening can be conducted on the prepared Ziegler-Natta catalyst by a sieving device.

The above-mentioned sieving device can be, for example, one or a combination of more selected from a vibrating screen, a fixed screen, a roller screen, a cylindrical screen and a curved screen, and in the specific embodiments of the present invention, the vibrating screen is chosen.

Preferably, the method also includes a step of packing the Ziegler-Natta catalyst. In particular, a screened qualified catalyst can be introduced into a catalyst mixing tank, the catalysts from multiple kettles can be directly packed after mixing or packed after being blended well with a white oil.

In the method according to the present invention, preferably, the each step is conducted under the protection of an inert gas.

In the method according to the present invention, preferably, the water content of each raw material is less than 10 ppm.

In the method according to the present invention, preferably, in the step (1), the molar ratio of the magnesium halide to the alcohol to the first electron donor is from 1:10:0.1 to 10:1:5, and the volume ratio of the alcohol to the inert solvent is from 1:10 to 10:1; more preferably, in the step (1), the molar ratio of the magnesium halide to the alcohol to the first electron donor is from 1:5:0.1 to 5:1:3; the volume ratio of the alcohol to the inert solvent is from 1:5 to 5:1.

In the method according to the present invention, preferably, the first contact reaction is performed at a temperature T₁ of 50 °C to 180 °C, and the first contact reaction is performed for a period of t₁ being 0.5 hour to 5 hours; more preferably, the first contact reaction is performed at a temperature T₁ of 80 °C to 150 °C, and the first contact reaction is performed for a period of t₁ being 1 hour to 3 hours.

In the method according to the present invention, preferably, the general formula of the magnesium halide is MgR¹R², wherein R¹ and R² are the same or different halogens. The above-mentioned magnesium halide includes but is not limited to magnesium chloride, magnesium bromide, magnesium iodide, etc; and the magnesium halide can be one or a mixture of more selected from the above-mentioned compounds having the general formula of MgR¹R²; more preferably, the magnesium halide is magnesium chloride, magnesium bromide or magnesium iodide, and in one specific embodiment of the invention, magnesium chloride is chosen.

In the method according to the present invention, preferably, the alcohol is monohydric alcohol, polyhydric alcohol or a mixture thereof. There is no specific limitation on the above-mentioned monohydric alcohol, the monohydric alcohol can be methanol, ethanol, propanol, isopropanol, butanol, isobutanol, tert-butanol, pentanol, isopentanol, neopentanol, hexanol, isohexanol, neohexanol, heptanol, isoheptanol, neoheptanol, octanol, isooctanol, neooctanol, nonanol or isononanol; further preferably, the monohydric alcohol is ethanol, tert-butanol, heptanol or isooctanol; more preferably, the monohydric alcohol is isooctanol.

In the method according to the present invention, preferably, the first electron donor and the second electron donor are respectively one or more selected from phenols, ketones, aldehydes, carboxylic acid, organic or inorganic acid ester, monoether, diether, ester ether and alkylsiloxanes; more preferably, the electron donor is polycarboxylic acid ester or diether.

In the method according to the invention, preferably, the first electron donor and the second electron donor are the same.

In the method according to the invention, preferably, the polycarboxylic acid ester is aromatic polycarboxylic acid ester, more preferably, the polycarboxylic acid ester is aromatic polycarboxylic acid monoester or aromatic polycarboxylic acid diester.

There is no particular limitation on the above-mentioned aromatic carboxylic acid diester, for example the aromatic carboxylic acid diester can be phthalic acid diester or terephthalic acid diester, wherein the phthalic acid diester can be one or a mixture of more selected from dimethyl phthalate, diethyl phthalate, di-n-propyl phthalate, diisopropyl phthalate, di-n-butyl phthalate, diisobutyl phthalate, methyl ethyl phthalate, methyl isopropyl phthalate, methyl n-propyl phthalate, ethyl n-butyl phthalate, ethyl isobutyl phthalate, di-n-pentyl phthalate, di-isopentyl phthalate, di-hexyl phthalate, di-n-heptyl phthalate, di-n-octyl phthalate, diisooctyl phthalate, bis(2,2-dimethylhexyl) phthalate, bis(2-ethylhexyl) phthalate, di-n-nonyl phthalate, diisodecyl phthalate, bis(2,2-dimethylheptyl) phthalate, n-butyl isohexyl phthalate, n-butyl 2-ethylhexyl phthalate, n-pentyl n-hexyl phthalate, n-pentyl isononyl phthalate, isopentyl n-decyl phthalate, n-pentyl undecyl phthalate, isopentyl isohexyl phthalate, n-hexyl 2-methylhexyl phthalate, n-hexyl 2-ethylhexyl phthalate, n-hexyl isononyl phthalate, n-hexyl n-decyl phthalate, n-heptyl 2-ethylhexyl phthalate, n-hepty isononyl phthalate, n-heptyl neononyl phthalate, and 2-ethylhexyl isononyl phthalate; there is no particular limitation on the above-mentioned terephthalic acid diester, for example the terephthalic acid diester can be one or a mixture of more selected from dimethyl terephthalate, diethyl terephthalate, di-n-propyl terephthalate, di-isopropyl terephthalate, di-n-butyl terephthalate, di-n-butyl terephthalate, diisobutyl terephthalate, ethyl methyl terephthalate, methyl isopropyl terephthalate, ethyl n-propyl terephthalate, ethyl n-butyl terephthalate, ethyl isobutyl terephthalate, di-n-pentyl terephthalate, di-isopentyl terephthalate, di-hexyl terephthalate, di-n-heptyl terephthalate, di-n-octyl terephthalate, diisooctyl terephthalate, bis(2,2-dimethylhexyl) terephthalate, bis(2-ethylhexyl) terephthalate, di-n-nonyl terephthalate, diisononyl terephthalate, diisodecyl terephthalate, bis(2,2-dimethylethylheptyl) terephthalate, n-butyl isohexyl terephthalate, n-pentyl n-hexyl terephthalate, n-pentyl isohexyl terephthalate, isopentyl heptyl terephthalate, n-pentyl 2-ethylhexyl terephthalate, n-pentyl isononyl terephthalate, isopentyl n-decyl terephthalate, n-pentyl undecyl terephthalate, isopentyl isohexyl terephthalate, n-hexyl 2-ethylhexyl terephthalate, n-hexyl isononyl terephthalate, n-hexyl n-decyl terephthalate, n-heptyl 2-ethylhexyl terephthalate, n-heptyl isononyl terephthalate, n-heptyl neodecyl terephthalate, and 2-ethylhexyl isononyl terephthalate; preferably, the aromatic carboxylic acid diester is one or a mixture of more selected from diethyl phthalate, di-n-butyl phthalate, di-isopropyl phthalate, di-n-butyl phthalate, diisobutyl phthalate, di-n-octyl phthalate, diisooctyl phthalate, diisodecyl phthalate, di-n-butyl terephthalate, diisobutyl terephthalate, di-n-octyl terephthalate, diisooctyl terephthalate, and bis(2-ethylhexyl) terephthalate.

There is no particular limitation on the above-mentioned diethers, for example, the diethers can be alkyl diethers, including: dimethyl ether, ethyl diether, methyl ethyl diether, ethylene glycol dimethyl ether, diethyl ether, 2,2-diisobutyl-1,3-dimethoxypropane, etc.; and aryl diethers, including: ditolyl ether, ethylphenyl diether, n-propylphenyl diether, isopropylphenyl diether, n-butylphenyl diether, isobutylphenyl diether, triphenyl diether, 9,9-bis(methoxymethyl)fluorene, 2-methoxymethylbenzofuran or bisphenol diether, etc.

There is no particular limitation on the above-mentioned alkylsiloxanes, for example the alkylsiloxanes can be cyclohexylmethyldimethoxysilane, diisopropyldimethoxysilane, di-n-butyl dimethoxysilane, diisobutyldimethoxysilane, diphenyldimethoxysilane, methyl tert-butyldimethox ysilane, dicyclopentyldimethoxysilane, 2-ethylpiperidyl-2-tert-butyldimethoxysilane, dicyclohexyl dimethoxysilane, cyclopentylcyclohexyldimethoxysilane or isobutylisopropyldimethoxysilane, etc.

In the method according to the present invention, preferably, the inert solvent is one or more selected from alkane, arene and a substitution product thereof.

There is no specific limitation on the above-mentioned alkane, for example the alkane can be n-hexane, isohexane, neohexane, cyclohexane, n-heptane, isoheptane, neoheptane, cycloheptane, n-octane, isooctane, neooctane, cyclooctane, n-nonane, isononane, neononane, cyclononane, n-decane, isodecane, neodecane or cyclodecane, etc.; the above-mentioned arene can be benzene, toluene, xylene, chlorobenzene, dichlorobenzene, trichlorobenzene, etc.; preferably, the alkane is n-hexane, n-heptane, n-octane, n-nonane, n-decane, toluene or xylene.

In the method according to the present invention, preferably, the first cooling is performed at a temperature T₂ of -50 °C to 10 °C; more preferably, the first cooling is performed at a temperature T₂ of -30 °C to 0 °C.

In the method according to the present invention, preferably, the second cooling is performed at a temperature T₃ of -50 °C to 10 °C; more preferably, the second cooling is performed at a temperature T₃ of -30 °C to 0 °C.

In the method according to the present invention, preferably, the general formula of the titanium halide is TiR³ₖR⁴ₗ, wherein R³ is halogen, R⁴ is C1-C5 alkoxy, 1 is an integer of 0 to 3, and k+l=4. In particular, for example, 1 can be 0, 1, 2 or 3, k can be 1, 2, 3 or 4; the titanium halide can be one or more selected from titanium tetrachloride, titanium tetrabromide, titanium tetraiodide, methoxy titanium trichloride, ethoxy titanium trichloride, propoxy titanium trichloride, n-butoxyl titanium trichloride, dimethoxy titanium dichloride, diethoxy titanium dichloride, dipropoxy titanium dichloride, di-n-butoxyl titanium dichloride, trimethoxy titanium chloride, triethoxy titanium chloride, tripropoxy titanium chloride and tri-n-butoxyl titanium chloride; more preferably, the titanium halide is titanium tetrachloride, titanium tetrabromide or titanium tetraiodide, and in one specific embodiment of the present invention, titanium tetrachloride is chosen.

In the method according to the present invention, preferably, in the step (4), the volume ratio of the cooled titanium halide to the cooled product containing the magnesium halide alcoholate is from 10:1 to 1:2; the molar ratio of the second electron donor to the magnesium halide alcoholate is from 1:20 to 1:1; more preferably, the volume ratio of the cooled titanium halide to the cooled product containing the magnesium halide alcoholate is from 5:1 to 1:1; the molar ratio of the second electron donor to the magnesium halide alcoholate is from 1:10 to 1:2.

There is no particular limitation on the adding method of the reaction materials in the above-mentioned step (4), and the reaction materials can be added simultaneously or each reaction material can be added successively.

In order to further ensure the performance of the prepared Ziegler-Natta catalyst, the adding time of the above-mentioned cooled product containing the magnesium halide alcoholate is limited, preferably, the adding time of the cooled product containing the magnesium halide alcoholate is from 0.2 hour to 5 hours; more preferably, the adding time of the cooled product containing the magnesium halide alcoholate is from 0.5 hour to 2 hours.

In the method according to the present invention, preferably, the second contact reaction is performed at a temperature T₄ of 50 °C to 200 °C, and the second contact reaction is performed for a period of t₂ being 0.5 hour to 10 hours; more preferably, the second contact reaction is performed at a temperature T₄ of 80 °C to 160 °C, and the second contact reaction is performed for a period of t₂ being 1 hour to 5 hours.

In the method according to the present invention, preferably, the first heating is performed at a temperature T₅ of 50 °C to 200 °C; more preferably, the first heating is performed at a temperature T₅ of 80 °C to 160 °C.

In the method according to the present invention, preferably, the third contact reaction is performed at a temperature T₆ of 50 °C to 200 °C, and the third contact reaction is performed for a period of t₃ being 0.5 hour to 10 hours; more preferably, the third contact reaction is performed at a temperature T₆ of 80 °C to 160 °C, and the third contact reaction is performed for a period of t₃ being 1 hour to 5 hours.

In the method according to the present invention, preferably, the second heating is performed at a temperature T₇ of 30 °C to 65 °C; more preferably, the second heating is performed at a temperature T₇ of 40 °C to 60 °C.

The above-mentioned steps can also include a step of drying the solvent before heating. There is no specific limitation on the drying, and the drying can be conducted by adopting a method commonly used in the art.

The present invention will be described below in detail by way of the examples.

In the following examples and comparative examples, unless otherwise specified, the materials used can all be commercially available, and unless otherwise specified, the method used is a conventional method in the art.
(1) The content of the catalyst component is determined by using a ultraviolet spectrophotometer, and the unit is wt%;
(2) The content of the internal electron donor is determined by using gas chromatography (GC);
(3) Isotacticity index (II) of a propylene polymer is determined by using a heptane extraction method.

### Example 1

(1) 50 kg of magnesium chloride, 300L of isooctanol, 20 kg of diisobutyl phthalate, and 400 L of n-decane were added into a reaction kettle subjected to nitrogen replacement, and reacted at 110 °C for 3 hours, to produce a magnesium chloride alcoholate;
(2) the obtained product containing the magnesium chloride alcoholate was filtered and then introduced into an alcoholate storage tank, and the alcoholate storage tank was cooled to -20 °C (1 hour); meanwhile, a titanium tetrachloride storage tank 1 was cooled to -20 °C (1 hour);
(3) 500L of cooled titanium tetrachloride was added into a catalyst loaded kettle;
(4) 150L of the cooled product containing the magnesium chloride alcoholate was slowly added into the catalyst loaded kettle (0.5 hour), after completion of adding, the catalyst loaded kettle was heated, and 5 kg of diisobutyl phthalate was added during heating, the temperature was raised to 135 °C (2 hours) for 3 hours of reaction; and meanwhile, a titanium tetrachloride storage tank 2 was heated to 135 °C (1 hour);
(5) the material in the catalyst loaded kettle was delivered to a filter, and filtered (1 hour), to obtain a solid particle;
(6) 500 L of the heated titanium tetrachloride was delivered to the filter, and the heated titanium tetrachloride carrying the solid particle was allowed to enter the catalyst loaded kettle, and reacted at 135 °C for 2 hours; and meanwhile, a dry hexane storage tank was heated (the temperature is 60 °C, 0.5h);
(7) after completion of the reaction, the material in the catalyst loaded kettle was delivered to the filter, and filtered (1 hour), and then washed for 6 times with heated hexane (1 hour);
(8) the washed catalyst solid particle was delivered to a drying kettle, and vacuum dried (4 hours); and
(9) the dried catalyst was graded (1 hour), and packed.

It was measured that the catalyst included 2.35wt% of titanium, 17.2wt% of magnesium, and 9.2wt% of an internal electron donor.

### Polymerization reaction

Propylene liquid phase bulk polymerization was conducted in a 5L stainless steel high pressure reactor with a mechanical agitation and temperature control device. The reactor was heated and vacuumized to remove air and moisture, and then nitrogen gas was inflated, and the above operation was repeatedly conducted for 3 times, 6 mmol of triethyl aluminium, 0.2 mmol of cyclohexylmethyldimethoxysilane and 20 mg of the catalyst prepared in the above-mentioned Example 1 were added, then 1 NL of hydrogen gas and 1200 g of liquid propylene were added under stirring, the temperature was raised to 70 °C, and the polymerization reaction was started to be carried out. After 1 hour of the reaction, an unreacted gas was discharged, to obtain a polypropylene powder.

It is measured that the catalytic activity was 37500 gPP/gCat, the bulk density of the polymer was 0.45 g/cm³, and isotacticity was 98.2%.

### Comparative example 1

(1) 50 kg of magnesium chloride, 300 L of isooctanol, 20 kg of diisobutyl phthalate, and 400 L of n-decane were added to a reactor subjected to nitrogen replacement, and reacted at 110 °C for 3 hours, to produce a magnesium chloride alcoholate;
(2) the obtained product containing the magnesium chloride alcoholate was filtered, then introduced to an alcoholate storage tank, and the alcoholate storage tank was cooled to 25 °C (1 hour);
(3) 500 L of titanium tetrachloride was added into a catalyst loaded kettle, and cooled to -20 °C (1 hour);
(4) 150 L of the product containing the magnesium chloride alcoholate was slowly added into the catalyst loaded kettle (0.5 hour), after completion of the adding, the catalyst loaded kettle was heated, and 5 kg of diisobutyl phthalate was added during the heating, the temperature was raised to 135 °C (2 hours) for 3 hours of reaction;
(5) the material in the catalyst loaded kettle was delivered to a filter, and filtered (1 hour), to obtain a solid particle;
(6) 500 L of titanium tetrachloride was delivered to the filter, titanium tetrachloride carrying the solid particle was allowed to enter the catalyst loaded kettle, the temperature was raised to 135 °C (1 hour) for 2 hours of reaction;
(7) after completion of the reaction, the material in the catalyst loaded kettle was delivered to the filter, and filtered (1 hour), and then washed for 6 times with heated hexane (1.5 hour);
(8) the washed catalyst solid particle was delivered to a drying kettle, and vacuum dried (4 hours); and
(9) the dried catalyst was graded (1 hour), and packed.

It was measured that the catalyst included 2.30wt% of titanium, 17.4wt% of magnesium, and 9.0wt% of an internal electron donor.

By adopting the polymerization condition the same to Example 1, it was measured that the catalytic activity was 37000 gPP/gCat, the bulk density of the polymer was 0.45g/cm³, and isotacticity was 98.3%.

The required time in each step during the catalyst production are as shown in the following Table 1.

**Table 1**

| | Example 1 | | Comparative example 1 | |
|---|---|---|---|---|
| | Material location | Residence time (h) | Material location | Residence time (h) |
| 1 | Alcoholate preparation kettle | 3 | Alcoholate preparation kettle | 3 |
| 2 | Alcoholate storage tank | 1 | Alcoholate storage tank | 1 |
| | Titanium tetrachloride storage tank 1 | | | |
| 3 | - | 0 | Catalyst loaded kettle | 1 |
| 4 | Catalyst loaded kettle | 5.5 | | 5.5 |
| | Titanium tetrachloride storage tank 2 | | | |
| 5 | Filter | 1 | | 1 |
| 6 | Catalyst loaded kettle | 2 | | 3 |
| | Hexane storage tank | | | |
| 7 | Filter | 2 | Filter | 1 |
| | | | | 1.5 |
| 8 | Drying kettle | 4 | Drying kettle | 4 |
| 9 | Sieving device | 1 | Sieving device | 1 |
| Total | | 19.5 | | 22 |

The compositions and performances of the catalysts prepared in Example 1 and Comparative example 1 are substantially the same, it can be known that the consumed time for producing a single batch of catalyst is as shown in the above Table 1: for production of the same catalyst, 22 hours was consumed in Comparative example 1, whereas only 19.5 hours was consumed in Example 1, and 2.5 hours was saved compared with the former; during continuous production, the processes of alcoholate preparing, catalyst washing, drying, sieving, etc. can be conducted at the same time as the catalyst loading, and the actual production time was:
Example 1: 19.5-3-1-2-4-1=8.5 (h)
Comparative example 1: 22-3-1-1.5-4-1=11.5 (h)

In Example 1, the actual production cycle is shorter, and the production efficiency is significantly increased.

### Example 2

A storage tank of the product containing the magnesium chloride alcoholate in the step (2) and the titanium tetrachloride storage tank 1 were cooled to -30 °C (1.5 hours), the reaction temperature in the step (4) was 80 °C (1 h), the filtering time in the corresponding step (5) and step (7) was increased to 2 hours, the washing time in the step (7) was increased to 2 hours, and the other conditions were the same to those of Example 1.

It was measured that the catalyst included 2.28wt% of titanium, 17.5wt% of magnesium, and 9.3wt% of an internal electron donor.

Polymerization conditions the same to those of Example 1 were adopted, and it was measured that the catalytic activity was 36600 gPP/gCat, the bulk density of the polymer was 0.47 g/cm³, and isotacticity was 98.4%.

### Comparative example 2

The catalyst loaded kettle in the step (3) was cooled to -30 °C (1.5 hour), the reaction temperature in the step (4) was 80 °C (1 hour), the filtering time in the corresponding step (5) and step (7) was increased to 2 hours, the washing time in the step (7) was increased to 3 hours, and the other conditions were the same to those of Example 1.

It was measured that the catalyst included 2.31wt% of titanium, 17.3wt% of magnesium, and 9.2wt% of the internal electron donor.

Polymerization conditions the same to those of Example 1 were adopted, and it was measured that the catalytic activity was 36200 gPP/gCat, the bulk density of the polymer was 0.47g/cm³, and isotacticity was 98.4%.

The compositions and performances of the prepared catalysts in example 2 and comparative example 2 were substantially the same, for production of the same catalyst, 24 hours was consumed in comparative example 2, whereas only 22 hours was consumed in example 2, and 3 hours was saved compared with the former; during continuous production, the processes of alcoholate preparing, catalyst washing, drying, and sieving, etc. can be conducted at the same time as the catalyst loading, and the actual production time was:
Example 2: 22-3-1.5-4-4-1=8.5(h)
Comparative example 2: 24-3-1-3-4-1=12(h)

In Example 2, the actual production cycle was shorter, and the production efficiency was significantly increased.

In comparative example 3, diisobutyl phthalate was not added in the step (1), and the other conditions were the same to those of Example 1.

It was measured that the catalyst included 2.26wt% of titanium, 18.4wt% of magnesium, and 5.8wt% of an internal electron donor.

Polymerization conditions the same to those of Example 1 were adopted, and it was measured that the catalytic activity was 24500 gPP/g Cat, the bulk density of the polymer was 0.41g/cm³, and the isotacticity was 92.1%.

In the step (4) of comparative example 4, the magnesium halide alcoholate was added in one time, and the other conditions were the same to those of Example 1.

It was measured that the catalyst included 2.51wt% of titanium, 17.1wt% of magnesium, and 9.5wt% of an internal electron donor.

Polymerization conditions the same to those of Example 1 were adopted, and it was measured that the catalytic activity was 29200 gPP/gCat, the bulk density of the polymer was 0.38g/cm³, and the isotacticity was 96.2%.

In comparative example 5, diisobutyl phthalate was not added in the step (1), the adding amount of diisobutyl phthalate was 25 kg in the step (4), and the other conditions were the same to those of Example 1.

It was measured that the catalyst included 2.31wt% of titanium, 18.5wt% of magnesium, and 5.2wt% of an internal electron donor.

Polymerization conditions the same to those of Example 1 were adopted, and it was measured that catalytic activity was 23600 gPP/gCat, the bulk density of the polymer was 0.41g/cm³, and the isotacticity was 92.3%.

Preferred embodiments of the present invention are described in detail above, but the invention is not limited to these embodiments. Within the scope of technical conception of the present invention, multiple simple variants can be made to the technical solution of the present invention, including a combination of various technical features in any suitable manner, and these simple variants and combination should be regarded as the content disclosed by the present invention as well, and all fall into the protection scope of the present invention.

## Claims

1. An industrial preparation method of a Ziegler-Natta catalyst, comprising the following steps:
(1) subjecting magnesium halide, alcohol and a first electron donor to a first contact reaction in the presence of an inert solvent to obtain a magnesium halide alcoholate;
(2) performing first cooling on the product containing the magnesium halide alcoholate obtained in the step (1) to obtain a cooled product containing the magnesium halide alcoholate;
(3) subjecting titanium halide to second cooling to obtain cooled titanium halide;
(4) subjecting the cooled titanium halide, the cooled product containing the magnesium halide alcoholate and a second electron donor to a second contact reaction; and
(5) filtering the product of the second contact reaction to obtain the Ziegler-Natta catalyst.

2. The preparation method according to claim 1, wherein the method also comprises the steps: subjecting titanium halide to first heating to obtain heated titanium halide, and subjecting the Ziegler-Natta catalyst in the step (5) and the heated titanium halide to a third contact reaction.

3. The preparation method according to claim 1, wherein the method also comprises a step of washing the Ziegler-Natta catalyst;
preferably, the method also comprises a step of sieving the Ziegler-Natta catalyst;
preferably, the method also comprises a step of packing the Ziegler-Natta catalyst.

4. The preparation method according to claim 3, wherein the method also comprises the steps:
subjecting a solvent to second heating to obtain a heated solvent, and washing the Ziegler-Natta catalyst in the step (5) by using the heated solvent;
wherein the solvent is pentane, hexane or heptane.

5. The preparation method according to any one of claims 1 to 4, wherein the each step is conducted under the protection of an inert gas;
preferably, the water content of the each raw material is less than 10 ppm.

6. The preparation method according to any one of claims 1 to 4, wherein the general formula of the magnesium halide is MgR¹R², wherein R¹ and R² are the same or different halogens;
preferably, the magnesium halide is magnesium chloride, magnesium bromide or magnesium iodide;
preferably, the alcohol is one or more selected from monohydric alcohol or polyhydric alcohol;
preferably, the first electron donor and the second electron donor are respectively one or more selected from phenols, ketones, aldehydes, carboxylic acid, organic or inorganic acid ester, ether, ester ether and alkylsiloxanes;
preferably, the inert solvent is one or more selected from alkane, arene and a substitution product thereof.

7. The preparation method according to any one of claims 1 to 4, wherein in the step (1), the molar ratio of the magnesium halide to the alcohol to the first electron donor is from 1:10:0.1 to 10:1:5, preferably from 1:5:0.1 to 5:1:3; the volume ratio of the alcohol to the inert solvent is from 1:10 to 10:1, preferably from 1:5 to 5:1.

8. The preparation method according to any one of claims 1 to 4, wherein the first contact reaction is performed at a temperature T₁ of 50 °C to 180 °C, preferably 80 °C to 150 °C, and the first contact reaction is performed for a period of t₁ being 0.5 hour to 5 hours, preferably 1 hour to 3 hours.

9. The preparation method according to any one of claims 1 to 4, wherein the first cooling is performed at a temperature T₂ of -50 °C to 10 °C, preferably -30 °C to 0 °C;
preferably, the second cooling is performed at a temperature T₃ of -50 °C to 10 °C, preferably -30 °C to 0 °C.

10. The preparation method according to any one of claims 1 to 4, wherein the general formula of the titanium halide is TiR³ₖR⁴ₗ, wherein R³ is halogen, R⁴ is C1-C5 alkoxy, 1 is an integer of 0 to 3, and k+l=4;
preferably, the titanium halide is titanium tetrachloride, titanium tetrabromide or titanium tetraiodide.

11. The preparation method according to any one of claims 1 to 4, wherein in the step (4), the volume ratio of the cooled titanium halide to the cooled product containing the magnesium halide alcoholate is from 10:1 to 1:2, preferably from 5:1 to 1:1; and the molar ratio of the second electron donor to the magnesium halide alcoholate is from 1:20 to 1:1, preferably from 1:10 to 1:2.

12. The preparation method according to any one of claims 1 to 4, wherein the second contact reaction is performed at a temperature T₄ of 50 °C to 200 °C, preferably 80 °C to 160 °C, and the second contact reaction is performed for a period of t₂ being 0.5 hour to 10 hours, preferably 1 hour to 5 hours.

13. The preparation method according to claim 2, wherein the first heating is performed at a temperature T₅ of 50 °C to 200 °C, preferably 80 °C to 160 °C.

14. The preparation method according to claim 2, wherein the third contact reaction is performed at a temperature T₆ of 50 °C to 200 °C, preferably 80 °C to 160 °C, and the third contact reaction is performed for a period of t₃ being 0.5 hour to 10 hours, preferably 1 hour to 5 hours.

15. The preparation method according to claim 4, wherein the second heating is performed at a temperature T₇ of 30 °C to 65 °C, preferably 40 °C to 60 °C.
